# NEW EUROPEAN PATENT SPECIFICATION

(11) **EP 1 577 159 B2**
(45) Date of publication and mention of the opposition decision: **08.02.2017**
(45) Mention of the grant of the patent: 14.01.2009
(21) Application number: 05075660.0
(22) Date of filing: 18.03.2005
(51) Int. Cl.: B60P 3/06, B62D 53/06

(54) **Trailer having pivoted axles and a central recess**
Anhänger mit Pendelachsen und zentraler Vertiefung
Remorque avec axes pivotants et échancrure centrale

(30) Priority: 18.03.2004 NL 1025755
(43) Date of publication of application: 21.09.2005
(73) Proprietor: Nooteboom Group B.V., 6603 BV Wijchen (NL)
(72) Inventor: Van de Vondervoort, Vincentius Henricus Antony, 47559 Kranenburg (DE)
(74) Representative: Bartelds, Erik

(56) References cited:
- EP-A1- 1 122 151
- DE-A1- 3 224 572
- DE-U- 29 617 052
- DE-U- 29 909 103
- FR-A- 1 520 884
- FR-A- 2 368 393
- US-A- 3 910 601
- US-A1- 2003 044 265

## Description

The invention relates to a trailer of the type that is known from DE-U-296 17 052.

The applicant has been marketing a trailer of the type designated a low-loader under the name "Euro low-loader". Such a low-loader has a front part that can be coupled to a tractive vehicle, a relatively low-lying loading floor connecting thereto and a rear chassis part which is raised once again relative to the loading floor and to which is attached the undercarriage consisting of one or more wheel lines - otherwise having single wheels instead of sets of wheels. The front part can take the form of a swan-neck which can be placed onto a kingpin of the tractor unit. The front part of such a low-loader can optionally also be provided with a number of wheel lines.

The total number of wheel lines of the trailer is determined by the anticipated weight of the cargo for transporting and the maximum permissible axle load, this being determined structurally as well as by law. In the case of trailers with single axles the maximum legally permitted axle load in most countries is lower than would be possible from a structural viewpoint. It will be apparent that with a larger number of wheel lines the length, weight, complexity and cost of the trailer will increase.

Low-loaders are often used to transport heavy plant, for instance bulldozers, excavators, cranes and the like. Particularly in the transport of excavators it is an advantage here if the rear chassis part has a central recess in which the excavator arm can come to rest. The total height of the load on the trailer is hereby reduced, which is important when passing viaducts, overhead wires and the like, without the length thereof having to increase much.

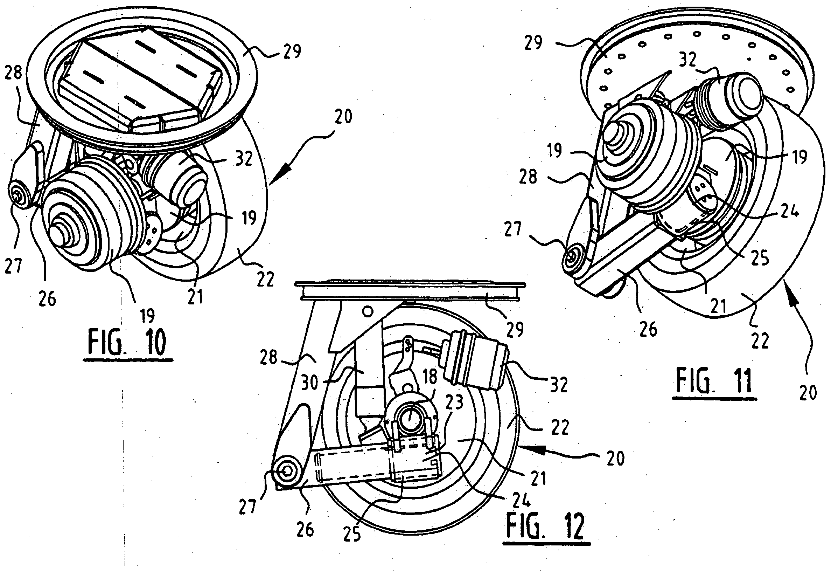

The above-identified prior art document DE-U-296 17 052 discloses a low-loader trailer having four wheel lines, each of which includes two sets of wheels. Each set of wheels is mounted on a wheel support arm that extends in longitudinal direction of the trailer and that is pivotable about an axle that extends in transverse direction. The prior art document uses the term "independently suspended half axle" to identify this type of suspension, and specifically states that this is not a pendulum axle. Each half axle is shown to extend over half the trailer width. In the embodiment shown in figures 11 and 12 of the prior art document the trailer includes a recess between the wheels - but above the half axes - which is used to accommodate the arm of an excavator that is carried on the trailer.

In the late 1980s and early 1990s Scheuerle Fahrzeugfabrik GmbH of Pfedelbach, Germany marketed a trailer, comprising a chassis and an undercarriage having one or more Wheel lines, wherein each wheel line comprises at least two sets of wheels placed on either side of the trailer, and wherein at the position of the undercarriage the chassis has a central recess running in longitudinal direction and open at the top for accommodating part of the load to be transported on the trailer, in particular an arm of an excavator, which recess extends in both longitudinal and height direction at least partially between the mutually opposite sets of wheels of one or more of the wheel lines, the chassis having a lowered middle part for supporting a load, and an end part raised relative thereto on which the undercarriage is suspended, and in which the recess is situated, wherein each wheel set has an axle body on which are mounted two wheels, wherein at least some of the wheel sets are steerable, and wherein at least some of the wheel sets on either side of the trailer are mechanically coupled to each other by means of a steering element which extends in transverse direction of the trailer, wherein the wheel sets have pivoted axles, each wheel set has an axle body on which are mounted two flat wheel hubs with associated brake drums, a wheel consisting of a rim and a pneumatic tyre being mounted on each wheel hub such that the wheel hub lies substantially in the plane of the wheel, each axle body is pivotable about a pivoted axle running substantially in longitudinal direction, said pivoted axle being arranged between the wheels below the axles of the wheel set, so that the axle body can execute a pivoting movement so that the wheels of the wheel set lie flat on a road surface in all conditions, each wheel set comprises at least one brake cylinder placed between the wheels thereof, the space between the wheels is smaller than 1.5 times the width of each wheel, preferably even smaller than the width of each wheel and substantially corresponds to the diameter of the at least one brake cylinder, and the steering element extends in the vicinity of a bottom of the recess.

The invention now has for its object to provide a relatively compact trailer which nevertheless has - in terms of both weight and volume - a high payload. This is achieved according to the invention with a trailer as defined in claim 1.

By making use of an undercarriage with pivoted axles a higher axle load can be achieved compared to a trailer with single shafts extending over the whole width of the trailer. Depending on legal regulations, the difference can rise to several tens of percent. This means that the trailer according to the invention with for instance four wheel lines could carry practically the same load as a conventional trailer of this type with five single axles. The construction length of the trailer can hereby remain limited. In addition, the height of the load on the trailer can be limited due to the presence of the central recess. A relatively large space can be left clear for the central recess between the left and right-hand wheel sets because the pivoted axle wheel sets of the invention have a limited width.

Placing the brake cylinder between the wheels and having the space between the wheels substantially correspond to the diameter of the brake cylinder optimizes the use that is made of the available space for accommodating parts of the undercarriage. By applying flat⁷ wheel hubs instead of the rounded protruding hubs that are generally used, the space available for components between the wheels of each wheel set is further maximized.

By making at least some of the wheel sets steerable the manoeuverability of the trailer is improved, while mechanical coupling of the wheel sets on either side of the trailer by means of a transversely extending steering element provides for optimum control of the steering movements. Owing to its placing close to the bottom of the recess, the steering element does not form an obstacle to loading of the trailer.

It is noted that trailers with pivoted axle wheel sets are per se known. In these known trailers there is however no space for a central recess because of the width of the pivoted axle wheel sets.

The chassis has a lowered middle part for bearing a load, and an end part raised relative thereto on which the undercarriage is suspended, and in which the recess is situated, which lies at substantially the same level as the load-bearing chassis part. A low-loader with pivoted axles is thus obtained with a loading floor which as it were extends between the wheels.

A strong, rigid and structurally simple trailer is obtained when the central recess is defined by a substantially U-shaped profile beam with a bottom and standing side walls which extends between the wheel sets lying opposite each other. In the travelling situation of the trailer the bottom can here advantageously be situated practically at the level of the axles of the wheel sets.

In order to further strengthen the part of the trailer where the recess is situated, there is preferably arranged under the recess a tubular chassis beam which extends to the middle part of the chassis.

So as to be able to load the cargo to be transported on the trailer, in particular self-propelled cargo such as heavy equipment, onto the trailer from the rear, the side walls are preferably connected to bearing chassis parts extending above the wheel sets, and support members are arranged between the tubular chassis beam and these bearing chassis parts.

Each wheel set is advantageously suspended here from a rotating element which is pivotally mounted in the chassis part extending above the wheel set. By mounting the rotating element in the chassis, instead of under it, the overall height of the trailer is minimized.

In order to allow the trailer to jounce and rebound, both during normal use and during loading thereof, each wheel set is preferably suspended from at least one support arm which is pivotable about a substantially horizontal axis. At least one spring/damper unit is here advantageously arranged between the support arm and the chassis.

A very compact steerable wheel suspension is obtained when the at least one support arm and the at least one spring/damper unit are mounted on the rotating element.

The invention will now be elucidated on the basis of a number of exemplary embodiments, wherein reference is made to the accompanying drawing, in which:
Fig. 1 shows a side view of the trailer according to a first embodiment of the invention with an excavator placed thereon,
Fig. 2 shows a view corresponding with fig. 1 of the trailer in unloaded state,
Fig. 3 shows a view corresponding with fig. 2 of the trailer in retracted state,
Fig. 4 and 5 show in more detail a top view and side view respectively of a second embodiment of the trailer according to the invention, which has two instead of three wheel lines,
Fig. 6 is a rear view of the trailer of fig. 4 and 5, wherein the tail-board is omitted,
Fig. 7 is a perspective top view of the rear part of a third embodiment of the trailer according to the invention, wherein a part of the sheeting is omitted,
Fig. 8 and 9 are perspective bottom views from different angles of the part of the trailer shown in fig. 7,
Fig. 10 and 11 show a perspective top view and a perspective bottom view respectively of a wheel set of the trailer according to the invention, wherein a wheel is omitted, and
Fig. 12 shows a side view of the wheel set of fig. 10 and 11, wherein in addition to a wheel an associated hub is also omitted.

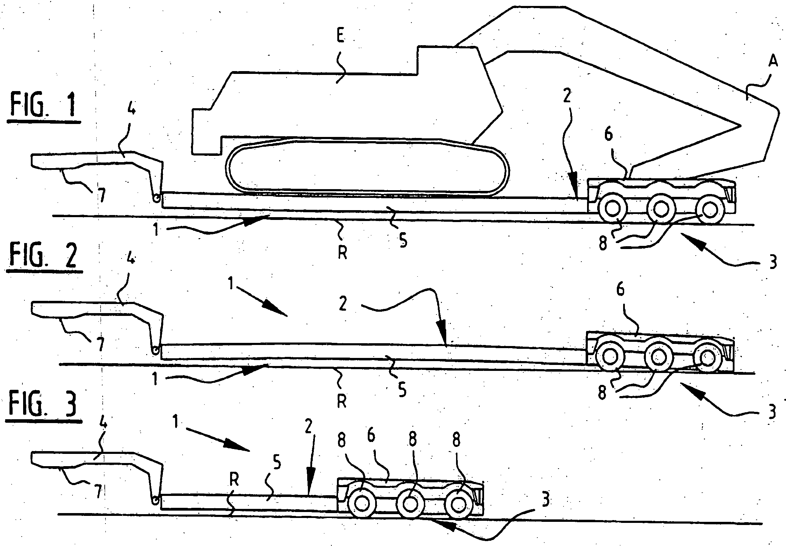

A trailer 1 (fig. 1) comprises a chassis 2 and an undercarriage 3. The trailer 1 is embodied as a low-loader. As seen from front to rear, chassis 2 herein has a swan-neck 4, a lowered part 5 for bearing a load, and a raised part 6 from which the undercarriage 3 is suspended. Swan-neck 4 is provided with means 7 for coupling the trailer to a tractive vehicle (not shown here).

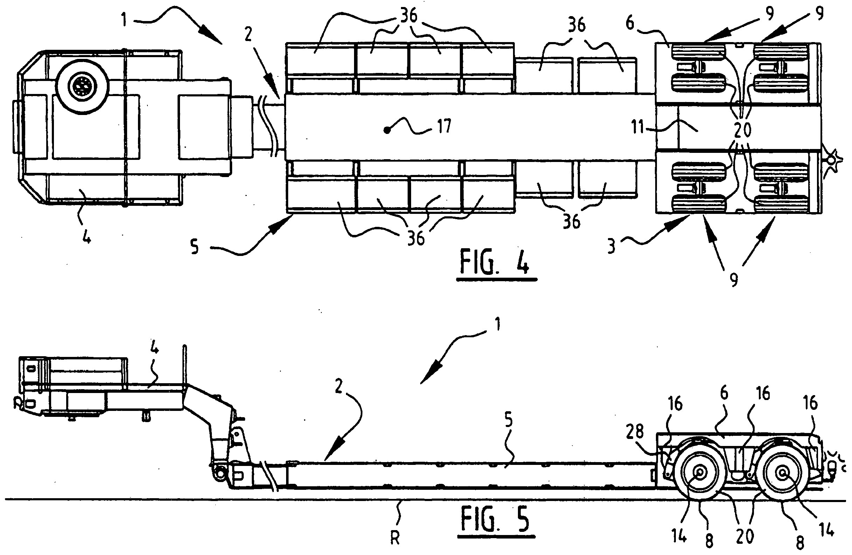

Undercarriage 3 comprise a number of wheel lines 8, here three, which each consist of two wheel sets 9 on either side of trailer chassis 2. Wheel sets 9 are embodied according to the invention with pivoted axles 10. Formed according to the invention in the raised chassis part 6 is a central recess 11 which extends in longitudinal direction between wheel sets 9 of the three wheel lines 8 as far as the rear of chassis 2 (fig. 4).

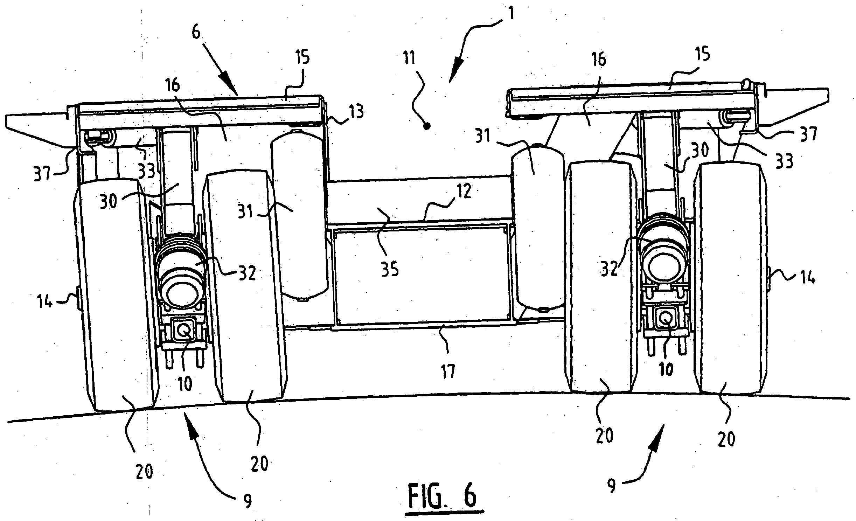

The central recess 11 is formed in the shown embodiment by a U-shaped profile beam which is open at the top and which has a bottom 12 and standing side walls 13 (only one of which is shown here). In the normal position of trailer 1, when it is situated at the normal travelling height, the bottom 12 of recess 11 is situated roughly at the level of axles 14 of wheel sets 9 (fig. 6).

The side walls 13 of the tubular beam connect at the top to horizontal chassis parts 15 which extend above wheel sets 9. These chassis parts 15 take a bearing form, so that it is possible to drive thereover during loading of trailer 1. The horizontal chassis parts 15 are supported for this purpose by means of support members 16 on a tubular chassis beam 17 situated under recess 11 and running under the lowered chassis part 5. Support members 16 are herein situated in front of and behind each wheel set 9.

Recess 11 is for instance suitable for allowing to rest therein the arm A having thereon the bucket of an excavator E for transporting on trailer 1, so that the total height of the loaded trailer 1 becomes minimal, and the centre of gravity thereof also comes to lie as low as possible. The dimensions of recess 11 are thus adapted to those of arm A and the bucket of excavator E, and amount to for instance 50 to 100 cm (width) by 30 to 80 cm (depth). As stated, the bottom 12 can herein be situated at about the level of wheel axles 14, although it is also possible for it to be at a higher position if this is preferable for structural reasons.

In the shown embodiment the lowered part 5 of chassis 2 which bears the load takes a slightly convex form (fig. 2) so that it lies flat in the loaded state, and the distance between chassis 2 and road surface R is therefore practically constant along the whole length of trailer 1.

In addition, trailer 1 can be extended and shortened in the shown embodiment in that the middle chassis part 5 and/or the rear chassis part 6 take a telescopic form. The length of trailer 1 can thus be considerably limited in the unloaded situation (fig. 3), whereby the manoeuvrability is improved and transport by road is simplified.

the middle chassis part 5 bearing the load can be provided with floor parts 36 attached releasably to the sides of chassis beam 17. These floor parts 36 form together with chassis beam 17 a loading floor of the desired form and dimensions.

As stated, wheel sets 9 take a pivoting form. Wheel set 9 has an axle body 18 (fig. 10, 11) on which are mounted two wheel hubs 19 with associated brake drums. A wheel 20 consisting of a rim 21 and a pneumatic tyre 22 is mounted on each wheel hub 19. Situated in the middle of axle body 18 is a sleeve 23 which is arranged around a cylindrical end part 24 of a wheel support arm 26. A tubular rubber torsion body 24 is enclosed between sleeve 23 and end part 24 (fig. 12). Through torsion of the tubular rubber body 24 the axle body 18 can execute a pivoting movement so that the wheels 20 of wheel sets 9 on either side of trailer 1 lie flat on the road surface R in all conditions, even when it is convex or otherwise uneven (fig. 6).

Each wheel support arm 26 extends substantially horizontally in the normal travelling situation and is mounted for pivoting with its foremost end about a horizontal axis 27 on a forked lower end of a wheel leg 28 which extends practically vertically. In the shown embodiment the wheel sets 9 take a steerable form and the upper end of wheel leg 28 is fixed to a rotating dish 29 which is in turn mounted pivotally in the protruding, horizontal chassis part 15. A very compact and low construction is obtained by making use of rotating dishes 29 which are mounted directly on the upper plate of horizontal chassis part 15 without the intervention of individual strengthening profiles.

A spring/damper unit 30 is arranged between rotating dish 29 and wheel support arm 26, whereby the movements of wheel set 9 in vertical direction can be controlled during travel. Each spring/damper unit 30, which can take a hydraulic or pneumatic form, is moreover connected to an associated reservoir 31 in which the relevant operating medium, thus hydraulic oil or air under pressure, is stored. Spring/damper unit 30 can be extended by feeding operating medium thereto from reservoir 31. For retraction of spring/damper unit 30 operating medium is fed back from this unit 30 to reservoir 31 (in the case of a hydraulic system) or vented into the environment (in a pneumatic system). In this way the height of trailer 1 can thus be adjusted. This is particularly important for loading of trailer 1, for which purpose the chassis 2 is brought as close as possible to road surface R, but it is also used to vary the travel height of trailer 1.

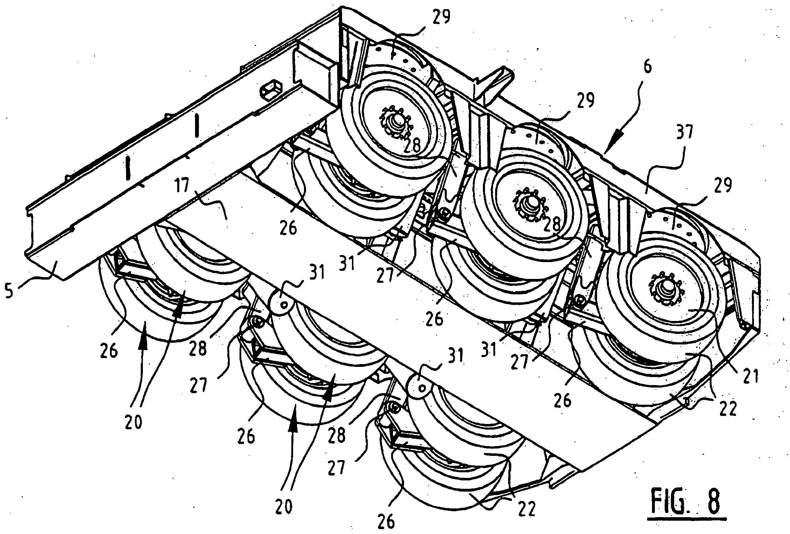

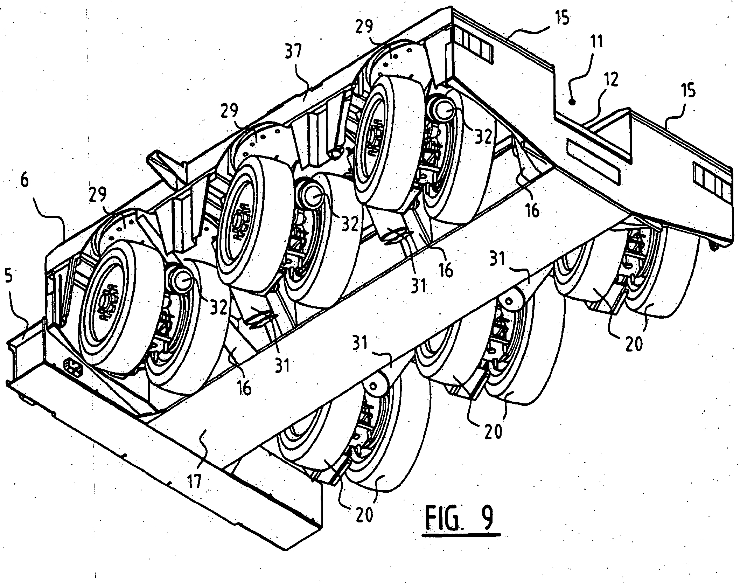

In order to obtain the most compact possible undercarriage 3, the reservoirs 31 for storing operating medium for the brake system - which in the shown embodiment takes a pneumatic form - are placed in each case against chassis beam 17 between two wheel sets 9 in the vicinity of support members 16 (fig. 8, 9). The steering movements of wheel sets 9 are thus not impeded by reservoirs 31, while the total width of trailer 1 still remains minimal. In the case of a hydraulic brake system it would be possible to suffice with a single relatively small reservoir, the placing of which is less critical.

In order to still keep sufficient space clear for the central recess 11 within this minimal width of trailer 1 - which preferably takes a narrow form such that it can travel on the public highway without special dispensation -, wheel sets 9 are given a considerably narrower form than conventional wheel sets with pivoted axles. Use is made for this purpose of a relatively short axle body 18, while wheel hubs 19 are accommodated as much as possible inside wheels 20 (fig. 10, 11). The end surfaces directed toward each other of wheel hubs 19 of a wheel set 9 each lie substantially in the plane of the side surface of the associated tyre 22. The space between the wheels 20 of each wheel set 9, which in the shown embodiment corresponds roughly to the width of a wheel, is thus just ⁷ sufficient to receive a brake cylinder 32 therein (fig. 6).

Wheel sets 9 are, as stated, steerable. Present for this purpose is a steering system which consists of steering cylinders 33 on either side of trailer 1, an outer end of which is fixed in each case close to the side edge 37 of horizontal chassis part 15 (fig. 6), while the other end is connected to one of the rotating dishes 29. This rotating dish 29 is connected to the other rotating dishes 29 on the associated side of trailer 1 by means of steering rods (not shown). In this manner all wheel sets 9 on one side of trailer 1 are steered simultaneously by steering cylinder 33. The ratio of the rotation of the different wheel sets 9 can be adjusted by an appropriate choice of the length of the steering rods and their points of engagement on rotating dishes 29. It is thus possible to ensure that wheel sets 9 have a greater steering movement the further they are situated from the coupling 7 to the tractive vehicle (fig. 8, 9).

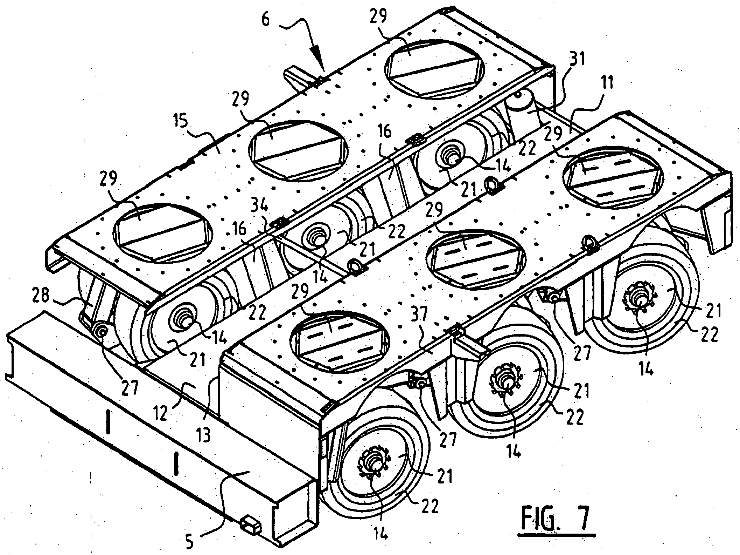

In order to ensure that all wheel sets 9 execute a requested steering movement, even if one of the steering cylinders 33 were for instance to fail, wheel sets 9 on either side of trailer 1 are mutually connected by a steering connecting rod 34 (fig. 7). This connecting rod 34 runs in transverse direction along the bottom 12 of recess 11 and is protected against damage by a guard 35. The free space in recess 11 is hardly affected by this arrangement.

Trailer 1 according to the invention makes it possible in the above described manner to combine a relatively high payload per wheel line - as a result of the use of pivoted axles - with an efficient loading due to the central recess.

Although the invention has been elucidated above with reference to a number of exemplary embodiments, it will be apparent that it can be varied in many ways. Less than two or more than three wheel lines can thus be used, while pivoted axles can also be combined with a recess on the front side of the trailer. In addition, the embodiment of the wheel sets used can be modified. Fixed wheel sets could thus also be chosen instead of steerable wheel sets for one or more wheel lines.

The scope of the invention is therefore defined solely by the appended claims.

## Claims

1. Trailer (1), comprising a chassis (2) and an undercarriage (3) having one or more wheel lines (8),
wherein each wheel line (8) comprises at least two sets (9) of wheels placed on either side of the trailer (1), and
wherein at the position of the undercarriage (3) the chassis (2) has a central recess (11) running in longitudinal direction and open at the top for accommodating part of the load to be transported on the trailer, in particular an arm of an excavator, which recess (11) extends in both longitudinal and height direction at least partially between the mutually opposite sets (9) of wheels of one or more of the wheel lines (8), the chassis (2) having a lowered middle part (5) for supporting a load, and an end part (6) raised relative thereto on which the undercarriage (3) is suspended, and in which the recess (11) is situated,
wherein each wheel set (9) has an axle body (18) on which are mounted two wheels (20),
wherein at least some of the wheel sets (9) are steerable, and wherein at least some of the wheel sets (9) on either side of the trailer (1) are mechanically coupled to each other by means of a steering element (34) which extends in transverse direction of the trailer (1),
wherein:
the wheel sets (9) have pivoted axles (10),
each wheel set (9) has an axle body (18) on which are mounted two flat wheel hubs (19) with associated brake drums, a wheel (20) consisting of a rim (21) and a pneumatic tyre (22) being mounted on each wheel hub (19) such that the wheel hub (19) lies substantially in the plane of the wheel (20),
each axle body (18) is pivotable about a pivoted axle (10) running substantially in longitudinal direction, said pivoted axle (10) being arranged between the wheels (20) below the axles (14) of the wheel set (9), so that the axle body (18) can execute a pivoting movement so that the wheels (20) of the wheel set (9) lie flat on a road surface (R) in all conditions,
each wheel set (9) comprises at least one brake cylinder (32) placed between the wheels (20) thereof,
the space between the wheels (20) is smaller than 1.5 times the width of each wheel (20), preferably even smaller than the width of each wheel (20) and substantially corresponds to the diameter of the at least one brake cylinder (32),
the recess (11) lies at substantially the same level as the load-bearing chassis part (5), and
the steering element (34) extends in the vicinity of a bottom (12) of the recess (11).

2. Trailer (1) as claimed in claim 1, **characterized in that** the central recess (11) has a width of 50 to 100 cm and a depth of 30 to 80 cm.

3. Trailer (1) as claimed in claim 1 or 2, **characterized in that** each wheel set (9) is suspended from at least one support arm (26), wherein a sleeve (23) situated in the middle of the axle body (18) is arranged around a cylindrical end part (24) of said wheel support arm (26) and wherein a tubular rubber torsion body (24) is enclosed between the sleeve (23) and the end part (24).

4. Trailer (1) as claimed in any of the preceding claims, **characterized in that** the central recess (11) is defined by a substantially U-shaped profile beam with a bottom (12) and standing side walls (13) which extends between the wheel sets (9) lying opposite each other.

5. Trailer (1) as claimed in claim 4, **characterized in that** in the travelling situation of the trailer (1) the bottom (12) is situated practically at the level of the axles (14) of the wheel sets (9).

6. Trailer (1) as claimed in any of claims 4 to 5, **characterized in that** a tubular chassis beam (17) which extends to the middle part (5) of the chassis (2) is arranged under the recess (11).

7. Trailer (1) as claimed in claim 6, **characterized in that** the side walls (13) are connected to bearing chassis parts (15) extending above the wheel sets (9), and support members (16) are arranged between the tubular chassis beam (17) and these bearing chassis parts (15).

8. Trailer (1) as claimed in any of the preceding claims, **characterized in that** each steerable wheel set (9) is suspended from a rotating element (29) which is pivotally mounted in the chassis part (15) extending above the wheel set (9).

9. Trailer (1) as claimed in any of the claims 3 to 8, **characterized in that** each wheel support arm (26) is pivotable about a substantially horizontal axis (27).

10. Trailer (1) as claimed in claim 9, **characterized in that** at least one spring/damper unit (31) is arranged between the support arm (26) and the chassis (2).

11. Trailer (1) as claimed in claims 8 and 10, **characterized in that** the at least one support arm (26) and the at least one spring/damper unit (31) are mounted on the rotating element (29).

## Patentansprüche

1. Anhänger (1), mit einem Chassis (2) und einem Fahrgestell (3) mit einer oder mehreren Achsenlinien (8),
wobei jede Achsenlinie (8) wenigstens zwei auf jeder Seite des Anhängers (1) angeordneten Sätze (9) von Rädern aufweist, und
wobei das Chassis (2) an der Position des Fahrgestells (3) eine in Längsrichtung verlaufende und an der Oberseite offene mittige Aussparung (11) zur Aufnahme eines Teils der Last die auf dem Anhänger zu transportieren ist, insbesondere eines Armes eines Baggers, hat, welche Aussparung (11) in sowohl der Längs- als auch der Höhenrichtung wenigstens teilweise zwischen den einander abgewandten Radsätzen (9) einer oder mehrerer der Achsenlinien (8) verläuft, wobei das Chassis (2) ein abgesenktes Mittelteil (5) zum Tragen einer Last aufweist, sowie ein relativ dazu erhöhtes Endteil (6), an dem das Fahrgestell (3) abgehängt ist und in dem die Aussparung (11) angeordnet ist,
wobei jeder Radsatz (9) ein Achslagergehäuse (18) aufweist, an dem zwei Rädern (20) montiert sind,
wobei wenigstens einige der Radsätze (9) lenkbar sind, und wobei wenigstens einige der Radsätze (9) auf jeder Seite des Anhängers (1) mittels eines Steuerelements (34), das sich in einer Querrichtung des Anhängers (1) erstreckt, mechanisch miteinander verbunden sind,
wobei:
die Radsätze (9) Pendelachsen (10) aufweisen,
jeder Radsatz (9) ein Achslagergehäuse (18) aufweist, an dem zwei flachen Radnaben (19) mit zugehörigen Bremstrommeln montiert sind, wobei ein aus einer Felge (21) und einem Luftreifen (22) bestehendes Rad (20) an jeder Radnabe (19) montiert ist, sodass die Radnabe (19) im Wesentlichen in der Ebene des Rades (20) liegt,
jedes Achslagergehäuse (18) um eine im Wesentlichen in Längsrichtung verlaufende Pendelachse (10) schwenkbar ist, welche Pendelachse (10) zwischen den Rädern (20) unter den Achsen (14) des Radsätzes (9) angeordnet ist, sodass das Achslagergehäuse (18) eine Schwenkbewegung ausführen kann, sodass die Räder (20) des Radsätzes (9) in allen Zuständen flach auf einer Straßenoberfläche (R) liegen,
jeder Radsatz (9) wenigstens einen zwischen seinen Rädern (20) platzierten Bremzylinder (32) aufweist,
der Raum zwischen den Rädern (20) kleiner als das 1,5-fache der Breite jedes Rades (20), und vorzugsweise noch kleiner als die Breite jedes Rades (20) ist und im Wesentlichen dem Durchmesser des wenigstens einen Bremzylinders (32) entspricht,
die Aussparung (11) im Wesentlichen auf dem gleichen Niveau wie das lasttragende Chassisteil (5) liegt, und
das Steuerelement (34) sich in der Nähe eines Bodens (12) der Aussparung (11) erstreckt.

2. Anhänger (1) nach Anspruch 1, **dadurch gekennzeichnet, dass** die mittige Aussparung (11) eine Breite von 50 bis 100 cm und eine Tiefe von 30 bis 80 cm aufweist.

3. Anhänger (1) nach Anspruch 1 oder 2, **dadurch gekennzeichnet, dass** jeder Radsatz (9) von wenigstens einem Tragarm (26) abgehängt ist, wobei eine sich in der Mitte des Achslagergehäuses (18) befindliche Hülse (23) um ein zylindrisches Endteil (24) des Radtragarms (26) angeordnet ist, und wobei ein rohrförmiger Gummitorsionskörper (24) zwischen der Hülse (23) und dem Endteil (24) eingeschlossen ist.

4. Anhänger (1) nach einem der vorherigen Ansprüche, **dadurch gekennzeichnet, dass** die mittige Aussparung (11) durch einen im Wesentlichen U-förmigen Profilträger mit einem Boden (12) und mit stehenden Seitenwänden (13) definiert ist, der sich zwischen den einander abgewandt liegenden Radsätzen (9) erstreckt.

5. Anhänger (1) nach Anspruch 4, **dadurch gekennzeichnet, dass** in der Fahrsituation des Anhängers (1) der Boden (12) sich praktisch auf dem Niveau der Achsen (14) der Radsätze (9) befindet.

6. Anhänger (1) nach einem der Ansprüche 4 bis 5, **dadurch gekennzeichnet, dass** ein rohrförmiger Chassisträger (17), der sich zu dem Mittelteil (5) des Chassis (2) erstreckt, unter der Aussparung (11) angeordnet ist.

7. Anhänger (1) nach Anspruch 6, **dadurch gekennzeichnet, dass** die Seitenwände (13) mit sich über den Radsätzen erstreckenden tragenden Chassisteilen (15) verbunden sind, und dass Stützelemente (16) zwischen dem rohrförmigen Chassisträger (17) und diesen tragenden Chassisteilen (15) angeordnet sind.

8. Anhänger (1) nach einem der vorherigen Ansprüche, **dadurch gekennzeichnet, dass** jeder lenkbare Radsatz (9) von einem Drehelement (29) abgehängt ist, das schwenkbar in dem sich über dem Radsatz (9) erstrecken den Chassisteil (15) montiert ist.

9. Anhänger (1) nach einem der Ansprüche 3 bis 8, **dadurch gekennzeichnet, dass** jeder Radtragarm (26) um eine im Wesentlichen horizontale Achse (27) schwenkbar ist.

10. Anhänger (1) nach Anspruch 9, **dadurch gekennzeichnet, dass** wenigstens eine Feder/Dämpfereinheit (31) zwischen dem Tragarm (26) und dem Chassis (2) angeordnet ist.

11. Anhänger (1) nach den Ansprüchen 8 und 10, **dadurch gekennzeichnet, dass** der wenigstens eine Tragarm (26) und die wenigstens eine Feder/Dämpfer-einheit (31) an dem Drehelement (29) befestigt sind.

## Revendications

1. Remorque (1), comprenant un châssis (2) et un train roulant (3) comportant une ou plusieurs lignes de roues (8),
dans laquelle chaque ligne de roues (8) comprend au moins deux ensembles (9) de roues placés de chaque côté de la remorque (1), et
dans laquelle, à la position du train roulant (3), le châssis (2) comporte un évidement central (11) s'étendant dans la direction longitudinale et ouvert sur le dessus pour recevoir une partie de la charge à transporter sur la remorque, en particulier un bras d'une excavatrice, lequel évidement (11) s'étend à la fois dans les directions longitudinale et de hauteur au moins partiellement entre les ensembles (9) mutuellement opposés de roues d'une ou de plusieurs des lignes de roues (8), le châssis (2) comportant une partie centrale (5) abaissée pour supporter une charge, et une partie d'extrémité (6) élevée par rapport à celle-ci, à laquelle le train roulant (3) est suspendu, et dans laquelle l'évidement (11) est situé,
dans laquelle chaque ensemble de roues (9) comporte un corps d'essieu (18) sur lequel deux roues (20) sont montées,
dans laquelle au moins certains des ensembles de roues (9) sont orientables, et dans laquelle au moins certains des ensembles de roues (9) de chaque côté de la remorque (1) sont accouplés mécaniquement les uns aux autres au moyen d'un élément de braquage (34) qui s'étend dans la direction transversale de la remorque (1),
dans laquelle:
les ensembles de roues (9) ont des essieux pivotants (10),
chaque ensemble de roues (9) comporte un corps d'essieu (18) sur lequel deux moyeux de roue (19) plats avec tambours de frein associés sont montés, une roue (20) consistant en une jante (21) et un pneu (22) étant montée sur chaque moyeu de roue (19) de sorte que le moyeu de roue (19) se trouve sensiblement dans le plan de la roue (20),
chaque corps d'essieu (18) est capable de pivoter autour d'un essieu pivotant (10) s'étendant sensiblement dans la direction longitudinale, ledit essieu pivotant (10) étant agencé entre les roues (20) au-dessous des essieux (14) de l'ensemble de roues (9), de sorte que le corps d'essieu (18) puisse exécuter un mouvement de pivotement de sorte que les roues (20) de l'ensemble de roues (9) reposent à plat sur un revêtement routier (R) dans toutes les conditions,
chaque ensemble de roues (9) comprend au moins un cylindre de frein (32) placé entre les roues (20) de celui-ci,
l'espace entre les roues (20) est inférieur à 1,5 fois la largeur de chaque roue (20), de préférence même inférieur à la largeur de chaque roue (20) et correspond sensiblement au diamètre dudit au moins un cylindre de frein (32),
l'évidement (11) se trouve sensiblement au même niveau que la partie de châssis de support de charge (5), et
l'élément de braquage (34) s'étend dans le voisinage d'un fond (12) de l'évidement (11).

2. Remorque (1) selon la revendication 1, **caractérisée en ce que** l'évidement central (11) a une largeur de 50 à 100 cm et une profondeur de 30 à 80 cm.

3. Remorque (1) selon la revendication 1 ou 2, **caractérisée en ce que** chaque ensemble de roues (9) est suspendu à au moins un bras de support (26), dans laquelle un manchon (23) situé au centre du corps d'essieu (18) est agencé autour d'une partie d'extrémité (24) cylindrique dudit bras de support de roue (26), et dans laquelle un corps de torsion (24) tubulaire en caoutchouc est enfermé entre le manchon (23) et la partie d'extrémité (24).

4. Remorque (1) selon l'une quelconque des revendications précédentes, **caractérisée en ce que** l'évidement central (11) est défini par une poutre profilée sensiblement en forme de U avec un fond (12) et des parois latérales (13) verticales qui s'étend entre les ensembles de roues (9) se trouvant les uns en face des autres.

5. Remorque (1) selon la revendication 4, **caractérisée en ce que**, dans la situation de déplacement de la remorque (1), le fond (12) est situé pratiquement au niveau des essieux (14) des ensembles de roues (9).

6. Remorque (1) selon l'une quelconque des revendications 4 à 5, **caractérisée en ce qu'**une poutre de châssis (17) tubulaire qui s'étend vers la partie centrale (5) du châssis (2) est agencée sous l'évidement (11).

7. Remorque (1) selon la revendication 6, **caractérisée en ce que** les parois latérales (13) sont reliées à des parties de châssis de support (15) s'étendant au-dessus des ensembles de roues (9), et des éléments de support (16) sont agencés entre la poutre de châssis (17) tubulaire et ces parties de châssis de support (15).

8. Remorque (1) selon l'une quelconque des revendications précédentes, **caractérisée en ce que** chaque ensemble de roues (9) orientable est suspendu à un élément rotatif (29) qui est monté de manière pivotante dans la partie de châssis (15) s'étendant au-dessus de l'ensemble de roues (9).

9. Remorque (1) selon l'une quelconque des revendications 3 à 8, **caractérisée en ce que** chaque bras de support de roue (26) est pivotant autour d'un axe (27) sensiblement horizontal.

10. Remorque (1) selon la revendication 9, **caractérisée en ce qu'**au moins une unité de ressort/d'amortisseur (31) est agencée entre le bras de support (26) et le châssis (2).

11. Remorque (1) selon les revendications 8 et 10, **caractérisée en ce que** ledit au moins un bras de support (26) et ladite au moins une unité de ressort/d'amortisseur (31) sont montés sur l'élément rotatif (29).
